Europäisches Patentamt

European Patent Office

Office européen des brevets

(19)

(11) Publication number: **0 097 554**
**A2**

# EUROPEAN PATENT APPLICATION

(12)

(21) Application number: 83401098.5

(22) Date of filing: 31.05.83

(51) Int. Cl.³: **G 01 N 27/46**

(30) Priority: 04.06.82 US 385233

(43) Date of publication of application:
04.01.84 Bulletin 84/1

(84) Designated Contracting States:
DE FR GB IT

(71) Applicant: THE BENDIX CORPORATION
Executive Offices Bendix Center
Southfield Michigan 48037(US)

(72) Inventor: Patton, Jesse Carl
3918 St. Johns Lane
Ellicott City Maryland 21043(US)

(74) Representative: Brullé, Jean et al,
Service Brevets Bendix 44, rue François 1er
F-75008 Paris(FR)

(54) Chemical sensors having a hydrophilic membrane as the electrolyte media.

(57) A chemical sensor having a pair of spatially separated electrodes (16, 18) and a thin structurally stable hydrophilic membrane (12) disposed therebetween. The hydrophilic membrane (12) is the host media for a liquid electrolyte and confines the liquid electrolyte to the region between the two electrodes (16, 18). The chemical sensor embodying the hydrophilic membrane (12) has the physical characteristics of a solid state device yet preserves all the attributes of a wet chemical sensor.

Fig-1

EP 0 097 554 A2

-1-

# CHEMICAL SENSORS HAVING A HYDROPHILIC MEMBRANE AS THE ELECTROLYTE MEDIA

## Cross Reference

The invention is related to the invention disclosed in co-pending EP application entitled "Hydrophilic Membrane Oxygen Sensor" filed same date.

## Background of the Invention

### Field of the Invention

The invention is related to chemical sensors and in particular to chemical sensors having a hydrophilic membrane as the electrolyte media.

### Prior Art

Chemical sensors comprising an electrochemical cell with an electrolyte disposed between a cathode and an anode are well known in the art. These sensors may be divided into two categories, those having ion-selective membrane electrodes such as disclosed by Genshaw et al in U.S. patent 3,856,649, by Battaglia et al in U.S. Patent 4,214,968 and by Chang et al in U.S. Patent 4,282,079 and those having gas permeable membranes such as disclosed by Niedrach in U.S. Patents 3,811,184; 3,714,015 and 3,705,088 by Parker in U.S. Patent 4,269,685 and by Garst in U.S. Patent 3,272,725.

Genshaw et al, Battaglia et al and Chang et al disclose dried electrolyte solutions which comprise a salt in solid solution with a hydrophilic binder or a

0097554

-2-

salt in solution with a hydrated gel. Niedrach et al disclosed ion exchange resin electrolytes such as quarternized polystyrene. Both Parker and Garst disclose electrolytes immobilized in a gel such as agar or agarose. The end affect of the prior art was to immobilize the electrolyte by placing it in solution with a solid or gelatinous type binder. For any given volume this approach significantly reduces the quantity of electrolyte available for the desired chemical reaction and inhibits ion mobility.

## Summary of the Invention

The invention is a chemical sensor having a hydrophilic membrane as a host media for a liquid electrolyte. An electrically conductive porous cathode is disposed over one surface of the hydrophilic membrane and in physical contact with the electrolyte and an electrically conductive anode is disposed over the other surface of the hydrophilic membrane and in physical contact with the electrolyte. The porous cathode is further overlayed with a thin ion selective or gas permeable material which also inhibits the evaporation of the electrolyte's solvent and controls the concentration of oxygen reaching the cell. In the preferred embodiment, the solvent of the electrolyte has a low volatility and high hydrophilicity (water like nature) such as ethylene glycol but other solvents, including water can be utilized.

One advantage of the chemical sensor is that the liquid electrolyte-hydrophilic membrane element is a structurally stable element. Another advantage of the invention is that the ion mobility of the liquid electrolyte in the hydrophilic membrane is greater than in the solid or gelatinous binders taught by the prior art. Another advantage of the chemical sensor is that the quantity of electrolyte absorbed in the hydrophilic membrane is greater than can be obtained with the electrolyte immobilization techniques used in the prior art. The quantity of electrolyte in the electrolyte membrane by weight is more than 70 percent of the total weight of the electrolyte saturated membrane. These and other advantages of the use of a hydrophilic membrane as the host media of the electrolyte in a chemical sensor will become apparent from reading the detailed description of the invention in combination with the drawings.

## Brief Description of the Drawings

FIGURE 1 is a cross section showing the general configuration of a hydrophilic membrane sensor.

FIGURE 2 is a cross section of a first embodiment of a polarographic oxygen sensor having a hydrophilic membrane as the host media for a liquid electrolyte.

FIGURE 3 is a polarogram showing the current voltage characteristics of the hydrophilic membrane oxygen sensor.

FIGURE 4 is a graph showing the oxygen sensitivity of the hydrophilic membrane oxygen sensor.

FIGURE 5 is a cross section of a chemical sensor having a cylindrical hydrophilic membrane.

FIGURE 6 is a transverse cross section of the chemical sensor shown in FIGURE 5.

FIGURE 7 is a cross section of a potentiometric chemical sensor having a hydrophilic membrane as the host media for a liquid electroylte.

-4-

## Detailed Description of the Invention

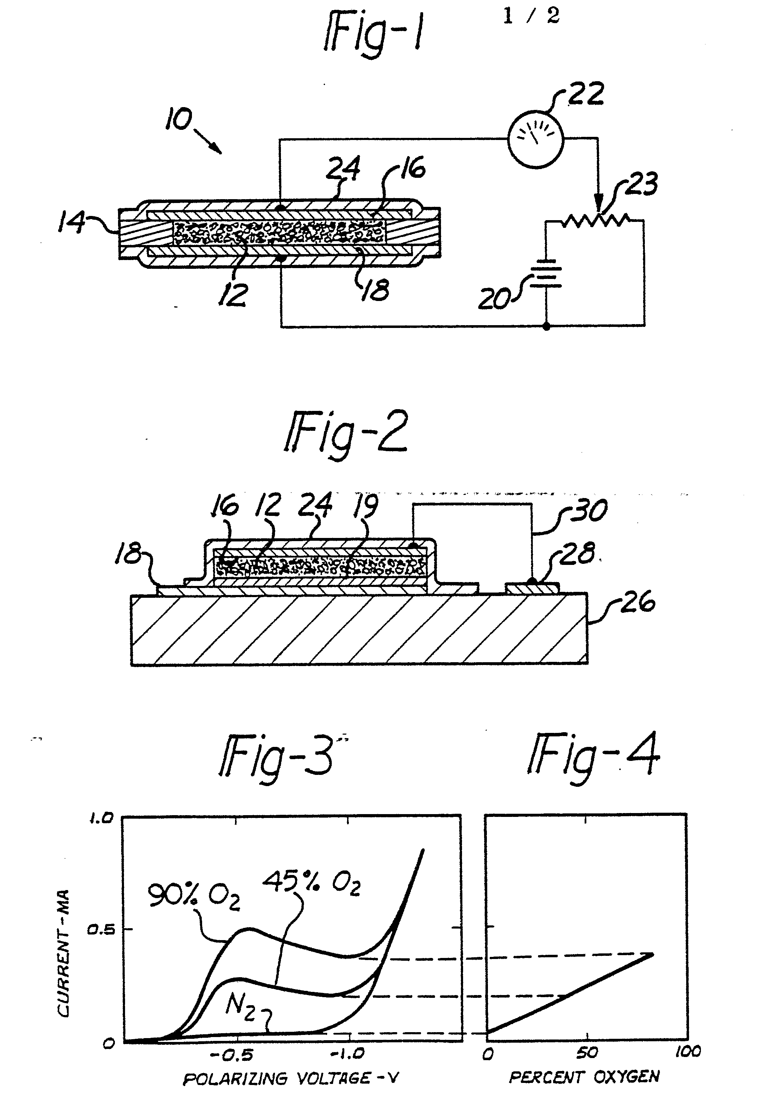

Referring to FIGURE 1 there is shown the basic embodiment of a chemical sensor 10 having a hydrophilic membrane as the host media for a liquid electrolyte. The sensor comprises a thin hydrophilic membrane 12 saturated with a liquid electrolyte consisting of an ionic salt dissolved in an appropriate solvent. The electrolyte may also contain buffers and other agents typically found in classical electrolytes or gels of the prior art. A spacer 14 may be provided about the periphery of the membrane 12 to provide edge support and increase the mechanical strength of the structure.

A porous cathode 16 is disposed over one surface of the membrane 12 in physical and electrical contact with the electrolyte. An anode 18 is disposed over the opposite surface of the membrane 12 in physical and electrical contact with the electrolyte. This configuration represents the classical electrolytic chemical sensor having a liquid electrolyte disposed between physically separate anode and cathode electrodes.

The anode 18 is adapted to be connected to a positive source of electrical potential, illustrated as the postive pole of a battery 20, while the cathode is adapted to be connected to a negative source of electrical potential illustrated as the negative pole of battery 20. An electrical current detector illustrated as a meter 22 is disposed in series between the anode 18 and cathode 16. The electrical current detector 22 may be disposed between the cathode 16 and battery 20 as shown or alternatively between the anode 18 and battery 20 as is known in the art. A variable resistance element 23 may be used to adjust the voltage between the anode 18 and cathode 16 as required.

In the illustration of FIGURE 1, the thickness of the membrane 12, cathode 16, and anode 18 are exaggerated to more clearly show the structural details of the sensor. In a typical application, the membrane 12 is a cellulose triacetate structure having the thickness in the range from 0.1 to 1.0 millimeters. These membranes are commercially available in sheet or cylindrical form from Moleculon Research Incorporated of Cambridge Massachusetts or may be made as taught by Nichols in U.S. patent 3,846,404. It is recognized that cellulose triacetate is not the only material from which the membrane may be made and other hydrophlic membranes, such as polyvinylalcohol or hydroxyethylmetharcylate membranes may be used in place of the cellulose triacetate membrane without departing from the spirit of the invention.

The electrolyte is selected on the basis of the constituent to be detected and may any of those well known in the art. The constituent to be detected may be a particular ion in a solution or a particular gas. In the case of a particular ion in a solution, the cathode 16 may be overlayed with an ion-selective membrane 24 as discussed by Battaglia et al in U.S. Patent 4,214,968. The ion-selective membrane interfaces the solution to be tested and permits the specific ion to be transported from the solution being tested to the electrolyte through the porous cathode. Ion-selective membranes of this type, which are generally well known, include an inert hydrophobic binder or matrix having dispersed therein an ion-carrier or selector commonly referred to as an ionophore which imparts selectivity to the membrane dissolved in a carrier solvent to provide adequate ion mobility in the ion selective membrane. Alternatively the ion-selective membrane may be a glass membrane as taught by Chang et al in U.S. patent 4,282,079.

The sensor may also take the form of a gas sensor in which the membrane 24 is selectively permeable to a selected gas or gases but hydraulically impermeable to the liquid electrolyte. In this case, the gas or gases sought to be detected passes through the membrane 24 to porous cathode 16 where it is electrochemically reduced. Gas sensors of this type have been disclosed by Parker in U.S. patent 4,269,685 and Niedrach et al in U.S. patents 3,673,069 3,705,088 and 3,811,184. The primary difference between the disclosed chemical sensor and the prior art is that the electrolyte in the disclosed sensor is entrapped in a liquid state in the dimensionally stable hydrophilic membrane wherein both Parker and Niedrach et al disclose the electrolyte disposed in an immobilized resin or gel.

The hydrophilic membrane chemical sensor will now be discussed with reference to an oxygen sensor as illustrated in Figure 2. Referring now to Figure 2 a electrically conductive silver anode 18 overlayed with a thin layer of silver chloride 19 is deposed on the surface of a structurally rigid non-conductive substrate 26. The substrate 26 may be a structural plastic, glass, quartz, or semiconductor material known in the art. A thin hydrophilic membrane 12 saturated with a potassium chloride (KCl) electrolyte solution is positioned over the anode 18 with the electrolyte in physical and electrical contact with the adjacent silver chloride surface of the anode. A porous noble metal cathode 16 such as a gold or platinum cathode is disposed over the other surface of the hydrophilic membrane 12 and in physical and electrical contact with the potassium chloride electrolyte. A thin layer of teflon, polyethylene or other suitable material 24, permeable to oxygen gas is overlayed over the cathode 16 and bonded to the substrate 26 to form a hydraulic seal about the saturated hydrophilic membrane 12.

The porous cathode 16 may be a thin wire mesh or may be a metallic grid vacuum deposited or sputtered onto the suface of the oxygen porous overlay 24 facing the hydrophilic membrane 12 prior to being placed thereover. An electrical lead 30 connects the gold cathode 16 to an electrical contact 28 deposited on the surface of the substrate 26. Electrical contact to the sensor is achieved through the exposed portion of the silver anode 18 and the electrical contact 28.

The solvent of the potassium chloride electrolyte is preferably ethylene glycol or a mixture of ethylene glycol and water having a low volatility and large hydrophilicity (water like nature). However, other solvents known in the art, including water, may be used. Ethylene glycol is the preferred solvent since its use in combination with the hydraulic seal provided by the oxygen permeable membrane 24 provides maximum life of the sensor.

The replacement of the electrolyte in the membrane for water is achieved by diffusional exchange. A water saturated membrane is first placed in an ethylene glycol solution having a volume of at least 10 times the capacity of the membrane and allowed to soak for a period of approximately 12 hours. After 12 hours, the remaining ethylene glycol is removed and replaced with a fresh solution. This process is repeated approximately 4 times over a period of two days and results in a saturated membrane where the ethylene glycol represents 70% to 80% of the total weight of the ethylene glycol saturated membrane.

The ethylene glycol saturated membrane is then placed in a soluble salt ethylene glycol electrolyte solution having a predetermined molar concentration. The electrolyte and membrane are then vigorously shaken until an equilibrium condition of the molar concentration of the soluble salt in the electrolyte inside and outside the membrane is obtained. This equilibrium is normally obtained within a 24 hour period. Measurement of the molar concentration of the free electrolyte outside the membrane at equilibrium has shown that the solvent-membrane system has approximately the same affinity for the soluble salt as the free solvent outside of the membrane. Therefore the molar concentration of the soluble salt in the electrolyte inside of the membrane is approximately the same as the molar concentration of the soluble salt in the electrolyte outside of the membrane.

A polarogram and sensitivity plot of an oxygen sensor having a hydrophilic membrane saturated with a potassium chloride-ethylene glycol electrolyte are illustrated in Figures 3 and 4 respectively.

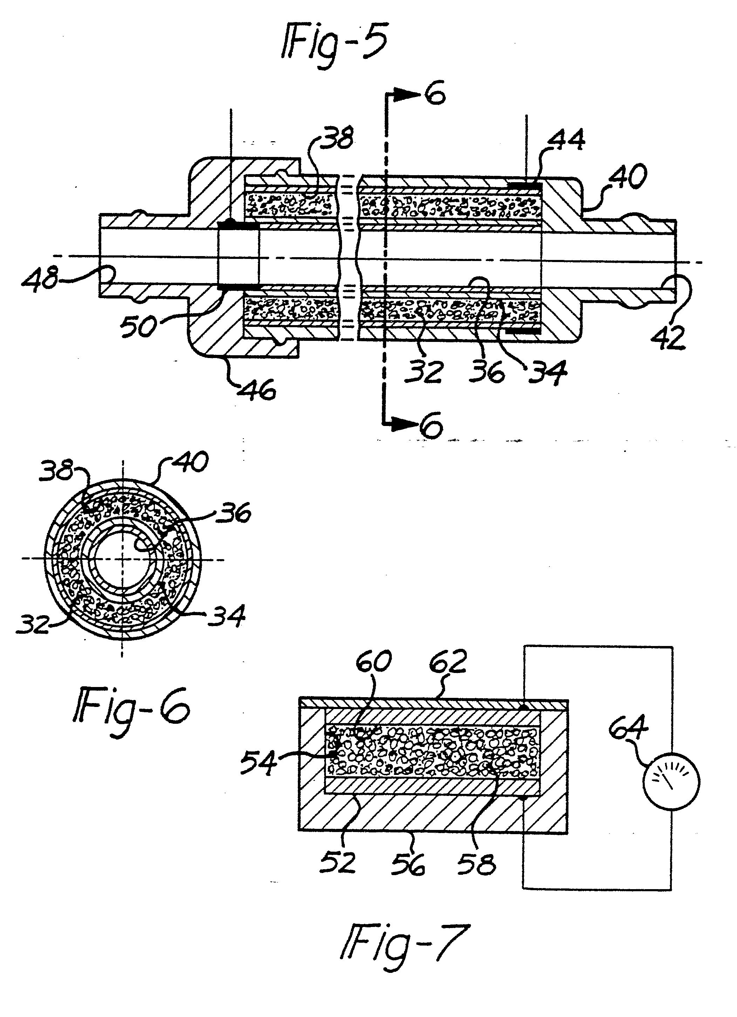

An alternate embodiment of a chemical sensor having a hydrophilic membrane as the host media for a liquid electrolyte is illustrated in Figures 5 and 6. Referring to Figures 5 and 6, the hydrophilic membrane 32 is formed in the shape of a hollow cylinder. As in previous embodiments, the hydrophilic membrane cylinder is saturated with an electrolyte solution, such as the potassium chloride-ethylene glycol electrolyte discussed relative to the oxygen sensor shown Figure 2. A porous cathode 34 is disposed along the inner surface of the hydrophilic membrane cyliner 32 and overlayed with an ion or gas permeable membrane 36. The external surface of the hydrophilic membrane cylinder 32 is overlayed with an electrically conductive anode 38. The entire assembly is then encased in a cylindrical housing 40 of a nonconducting material having an inlet port 42 disposed at one end thereof concentric with the hydrophilic membrane cylinder. An electrical contact member 44 makes electrical contact with the anode 38 when the hydrophilic membrane assembly is inserted. The contact member 44 may be a metal ring embedded in the internal surface of the housing 40 having spring loaded fingers engaging the surface of anode 38.

A cap 46 encloses the opposite end of the housing 40 and has an outlet 48 concentric with the hydrophilic membrane cylinder. The cap 46 also includes a second electrical contact 50 engaging the porous cathode 34. The cap 46 may be attached to the housing 40 by any means known in the art, such as by gluing, welding, snap locks twist locks etc. In this embodiment, the sensor will detect the concentration of the desired ion or gas in a fluid flowing between the inlet and outlet ports of housing 40.

Since the electrolyte is confined in the hydrophilic membrane, the hydrophilic membrane chemical sensor can be handled and applied as if it were a solid state device yet preserve all the attributes of a wet chemical sensor. Further it can be made extremely small and almost to any desired configuration. These characteristics make the hydrophilic membrane sensor applicable to a wide variety of applications including solid state devices. In particular, the hydrophilic membrane oxygen sensor may be disposed on a small silicon chip corresponding to the silicon chips used in current integrated circuits. Existing silicon etching and fabrication technology are directly applicable to the fabrication of the sensors. For example, the sensor may be embodied as an electrolytic oxyde semiconductor (EOS) device with the oxygen sensor and associated electronics formed directly on the silicon chip. Alternatively the sensor may be embodied in the form of a chemical field effect transistor (Chem. FET) where the anode of the oxygen sensor functions as the control gate of the field effect transistor.

A hydrophilic membrane saturated with a liquid electrolyte may also be used in a potentiometric sensor such as the potentiometric oxygen sensor illustrated in FIGURE 7. Referring to FIGURE 7 an anode 52 made from an appropriate metal, such as lead, is disposed in the well 54 of a nonconductive base 56. Base 56 may be made from a structural plastic, glass quartz or a semiconductor material. A hydrophilic membrane 58 saturated with liquid electrolyte such an aqueous solution of potassium hydroxide (KOH) is disposed over the anode 52 with the electrolyte in physical and electrical contact with the anode 52. A porous electrically conductive cathode 60 such as a gold or platinum wire mesh is disposed over the hydrophilic membrane 58 in physical and electrical contact with the electrolyte. The entire assembly is overlayed with a gas or ion permeable membrane 62 such as a thin layer of teflon which is impervious to the liquid electrolyte. A voltage sensor, illustrated as volt meter 64 measures the electrical potential generated between the anode 52 and cathode 60 in response to the electrochemical reduction of the gas permeating through the permeable membrane 62 at the surface of the cathode. The lead anode is oxidized. The potential generated between the anode 52 and cathode 60 will have a value corresponding to the concentration of oxygen in the sample being detected by the sensor.

It is not intended that the invention be limited to the particular hydrophilic membrane, anode and cathode materials, electrolytes, or configurations illustrated and discussed herein. It is recognized that those skilled in the art are well capable of using the different anode and cathode materials and different electrolytes well known in the art or make other changes. without departing from the spirit of the invention as disclosed herein and set forth in the appended claims:

Claims:

1. An improved chemical sensor having a liquid electrolyte and two spatially separated electrodes (16, 18) in physical and electrical contact with the liquid electrolyte, the improvement characterized by a structurally integral hydrophilic membrane (12) disposed between said spatially separated electrodes (16, 18), said hydrophilic membrane (12) hosting the liquid electrolyte keeping it in an immobilized state between and in physical and electrical contact with the two spatially separated electrodes.

2. The chemical sensor of Claim 1 further including:
   means 23 for applying a potential difference between said two electrodes; and
   means (22) associated with said means for applying a potential difference for measuring the current flow through said electrolyte.

3. The chemical sensor of Claim 1 further including means (64) for measuring the potential between said two electrodes.

4. The chemical sensor of Claim 1 wherein said hydrophilic membrane (12) is a planar membrane having a thickness in the range from 0.1 to 1.0 millimeters.

5. The chemical sensor of Claim 4 wherein said hydrophilic membrane (12) is a cellulose triacetate membrane.

6. The chemical sensor of Claims 4 or 5 wherein said electrolyte is an electrolytic salt dissolved in a liquid solvent.

7. The chemical sensor of Claim 6 wherein said liquid solvent has a low volatility and a high hydrophilicity.

8. The chemical sensor of Claim 7 wherein said solvent is ethylene glycol.

9. The chemical sensor of Claim 6 wherein one of said two electrodes (16, 18) is a porous cathode (16) and the other is an anode (18), said chemical sensor further including an ion-sensitive member (24) disposed over said cathode (16).

10. The chemical sensor of Claim 6 wherein one of said two electrodes (16, 18) is a porous cathode (16) and the other is an anode (18), said chemical sensor further includes a gas permeable membrane (24) disposed over said cathode (16).

11. The chemical sensor of Claim 1 wherein said hydrophilic membrane (12) is a cylinder (32) having an internal surface and an external surface and wherein one of said electrodes (16, 18) is a porous cathode (34) disposed along said internal surface and the other electrode (18) is an anode (38) disposed along said external surface.

12. The chemical sensor of Claim 11 wherein said electrolyte comprises an electrolytic salt dissolved in a liquid solvent having a low volatility and a high hydrophilicity.

13. The chemical sensor of Claim 12 wherein said electrolyte is ethylene glycol.

14. The chemical sensor of Claim 11 further including an ion-selective member (36) disposed over said porous cathode (34) and in physical contact with the electrolyte through said porous cathode.

15. The chemical sensor of Claim 11 further including a gas permeable membrane (36) disposed over said porous cathode (34).

16. The chemical sensor of Claims 14 and 15 further including a cylindrical housing (40, 46) circumscribing said cylindrical hydrophilic membrane (32), said housing (40, 46) having an inlet port (42) at one end and an exit port (48) at the other end.

17. A method for making a chemical sensor characterized by the steps of:

saturating a structurally integral hydrophilic membrane (12) with a liquid electrolyte;

disposing a porous electrically conductive cathode (16) over one surface of said hydrophilic membrane (12); and

disposing an electrically conductive anode (18) over the opposite surface of said hydrophilic membrane (12).

18. The method of Claim 17 further including the step of disposing an ion sensitive member (24) over said cathode.

19. The method of Claim 17 further including the step of disposing a gas permeable membrane (24) over said cathode.

0097554

-14-

20. The method of Claim 17 wherein said electrolyte is an aqueous electrolyte solution, said step of saturating comprises the steps of:

placing said hydrophilic membrane (12) in an aqueous electrolyte solution having a predetermined molar concentration of a electrolytic salt; and

shaking said hydrophilic membrane (12) in said aqueous electrolyte solution until the molar concentration of the electrolytic salt in the acqueous solution outside of the hydrophilic membrane (12) stabilizes at a new value.

21. The method of Claim 17 wherein the solvent of said electrolyte is non-aqueous, said step of saturating comprises the steps of:

soaking said hydrophilic membrane (12) in said solvent for a predetermined period of time; to displace the water in said hydrophilic membrane (12) with said non-aqueous solvent;

placing said solvent saturated membrane (12) in said non-aqueous electrolyte having a predetermined molar concentration of an electrolytic salt; and

vigorously shaking said membrane (12) in said non-aqueous electrolyte until the molar concentration of said electrolytic salt stabilizes at a new value.

22. The method of Claim 21 wherein said step of soaking further includes the step of periodically changing said non-aqueous solvent to insure the maximum purity of the solvent in the membrane (12).

23. The method of Claim 22 wherein said step of soaking saturates said membrane (12) with said non-aqueous solvent having a weight greater than 70 percent of the total weight of said saturated membrane (12).

0097554

1 / 2

Fig-1

Fig-2

Fig-3

Fig-4

Fig-5

Fig-6

Fig-7